# FASCICULE DE BREVET EUROPEEN

(11) **EP 2 688 707 B1**
(45) Date de publication et mention de la délivrance du brevet: **11.03.2015**
(21) Numéro de dépôt: 12714785.8
(22) Date de dépôt: 15.03.2012
(51) Int. Cl.: B23P 6/00, F01D 21/00, G01N 21/88, F01D 21/04, B64D 33/02

(54) **PROCÉDÉ D'INSPECTION DES IMPACTS OBSERVÉS DANS DES CARTERS DE SOUFFLANTE.**
VERFAHREN ZUR INSPEKTION VON FESTGESTELLTEN EINSCHLÄGEN IN LÜFTERGEHÄUSE
METHOD OF INSPECTING IMPACTS OBSERVED IN FAN CASINGS

(30) Priorité: 25.03.2011 FR 1152492
(43) Date de publication de la demande: 29.01.2014
(73) Titulaire: SNECMA, 75015 Paris (FR)
(72) Inventeur: TRAN, Julien, F-95300 Pontoise (FR); LAVIGNOTTE, Richard, F-77000 Melun (FR)
(74) Mandataire: Camus, Olivier Jean-Claude
(86) Numéro de dépôt international: PCT/FR2012/050542
(87) Numéro de publication internationale: WO 2012/131211

(56) Documents cités:
- JP-A- 2005 339 249
- US-A- 5 293 309
- US-B1- 6 219 930

## Description

### DOMAINE TECHNIQUE DE L'INVENTION

La présente invention concerne un procédé d'inspection d'impacts observés dans des carters de soufflante de moteurs d'aéronefs.

Le domaine de l'invention est, d'une façon générale, celui des moteurs d'aéronefs, et plus particulièrement de la surveillance de l'état de ces moteurs au fil du temps. Dans la présente invention, on s'intéresse plus précisément aux carters de soufflante ; on rappelle que dans un tel contexte, une soufflante est d'une manière générale une hélice multiple carénée, qui peut être montée à l'avant ou bien à l'arrière des réacteurs, et dont la fonction est de contribuer à l'augmentation de la poussée générée par le réacteur, en accélérant la grande masse d'air qui la traverse avant l'éjection de celle-ci dans l'atmosphère.

Sur certains moteurs d'aéronefs, les carters de soufflante, et notamment les carters dépourvus de panneaux acoustiques, sont soumis en permanence à des impacts de corps étrangers de taille très variable ; de tels corps sont par exemple du sable, des grêlons, des cailloux, des oiseaux... De tels impacts provoquent une diminution locale de l'épaisseur du carter, ce qui risque d'affecter la capacité de rétention de celui-ci.

Ces défauts sont le plus souvent constatés sous l'aile de l'aéronef, lors d'inspections avant décollage, ou lors de visites régulières avec dépose moteur en atelier de maintenance.

### ARRIERE-PLAN TECHNOLOGIQUE DE L'INVENTION

Les carters de soufflante peuvent être réalisés en différents matériaux, par exemple en acier, en composite. Ils sont souvent réalisés en aluminium Des réparations des défauts créés par les impacts mentionnés ont été envisagées par des méthodes de soudure ; mais les procédés classiques par soudure, connus sous l'acronyme TIG, ont été envisagées pour recharger ces impacts mais les procédés classiques (TIG) ne donnent pas de résultats satisfaisants, notamment sur les carters en aluminium. De telles réparations n'étant pas applicables, on a été amené, lorsque les impacts étaient de dimension importantes, à remplacer le carter complet, ou au démontage du moteur.

Une alternative au remplacement complet du carter réside dans l'obtention d'une validation technique qui se traduit par une dérogation administrative, dite CDR, pour pouvoir continuer à utiliser les carters impactés, éventuellement après avoir réalisé de légères retouches sur les défauts observés. Cependant, avec le vieillissement de la flotte et le nombre croissant de moteurs en activité, ces défauts récurrents amènent à des demandes de validation technique de plus en plus nombreuses, et des retards induits sur la remise en service des pièces faisant l'objet des défauts observés.

En conséquence, afin d'accélérer le traitement de ce type de défauts, des critères d'acceptabilité ont été introduits dans la documentation technique. Il existe ainsi désormais des critères d'acceptation des défauts évoqués qui permettent à un contrôleur de statuer rapidement sur la nocivité des défauts sans nécessairement requérir une dérogation. Ces critères d'acceptation ont été établis sur la base des constats sur différents carters et de lois empiriques permettant de statuer sur la capacité de rétention du carter en fonction de son épaisseur résiduelle.

Ces critères d'acceptation se présentent sous la forme de trinômes de dimensions caractérisant les défauts admissibles ; une première valeur de ce trinôme est relative à une profondeur maximale admissible, une deuxième valeur est relative à une longueur maximale admissible, et une troisième valeur est relative à une distance minimale à observer entre deux défauts, notamment deux défauts liés à un impact. Ainsi, par exemple, pour une zone amont d'un carter, si un contrôleur détecte un impact d'une profondeur de 0,1524 mm (millimètres), il a connaissance du fait, par l'existence d'un trinôme associé à cette profondeur, que le défaut considéré ne doit pas présenter une longueur supérieure à 25,4 mm, et qu'aucun autre défaut ne doit être présent à une distance inférieure à 3,048 mm.

Malheureusement, ces critères d'acceptation ne permettent d'accepter qu'un nombre limité de défauts, du fait de la nécessité de disposer de valeurs de référence comparables, et n'empêchent donc pas l'augmentation du nombre de validations demandées ; il faudrait, pour remédier à ce problème, accepter d'introduire constamment de nouveaux critères d'acceptation à chaque nouveau défaut constaté, ce qui ne constitue pas une solution viable à long terme. De plus, compte-tenu du nombre de trinômes de valeurs déjà présents disponibles, cette méthode d'inspection peut s'avérer assez lourde et complexe pour les contrôleurs.

Le document US6219930 B1 divulgue une méthode d'inspection d'impacts.

### DESCRIPTION GENERALE DE L'INVENTION

L'objet de l'invention offre une solution aux problèmes qui viennent d'être exposés en proposant un procédé d'inspection simplifié, rendant la tâche plus aisée pour les contrôleurs ; l'invention vise à évaluer de manière simple la nocivité des impacts observés afin d'accélérer le traitement de ces défauts. Pour ce faire, la présente invention propose l'utilisation d'outils d'inspection simples, qui ne nécessitent pas de formation particulière pour leur utilisation, qui permettent essentiellement de s'affranchir de déterminer les distances entre les différents impacts tout en permettant de statuer rapidement sur l'acceptation ou non de ces défauts vis-à-vis de la capacité de rétention du carter de soufflante.

L'invention concerne donc essentiellement un procédé d'inspection d'impacts présents sur une face interne de carter de soufflante, ledit procédé étant caractérisé en ce qu'il comporte les différentes étapes consistant à :
- repérer un premier impact présent sur la face interne du carter de soufflante ;
- délimiter une surface d'inspection comportant ledit premier impact ;
- repérer les différents impacts présents dans la surface d'inspection délimitée, lesdits différents impacts repérés formant un ensemble d'impacts à considérer ;
- mesurer, pour chaque impact à considérer, la profondeur et la longueur dudit impact;
- pour chaque impact à considérer, déterminer une valeur de taux de nocivité, au moyen d'au moins un abaque mettant en relation la profondeur et la longueur de chaque impact à considérer avec un taux de nocivité ;
- déterminer, pour la surface d'inspection comportant le premier impact, une valeur de taux de nocivité total en additionnant le taux de nocivité déterminé pour chaque impact à considérer.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon toutes les combinaisons techniquement possibles :
- l'étape consistant à délimiter une surface d'inspection contenant le premier impact est réalisée au moyen d'un masque.
- le masque est de forme rectangulaire.
- les dimensions du masque dépendent de la localisation de la surface d'inspection, un premier masque de premières dimensions étant utilisé pour une zone amont du carter, et/ou un deuxième masque de deuxièmes dimensions étant utilisé pour une zone abradable du carter, et/ou un troisième masque de troisièmes dimensions pouvant être utilisé pour une zone aval du carter.
- le premier masque est de forme rectangulaire, de longueur 71 millimètres plus ou moins dix pour cent, avantageusement 71 millimètres, et de largeur 20 millimètres plus ou moins dix pour cent, avantageusement 20 millimètres, et/ou le troisième masque est de forme carrée, de côté 250 millimètres plus ou moins dix pour cent, avantageusement 250 millimètres.
- le masque est de forme rectangulaire ayant les caractéristiques suivantes :
   - un premier côté du masque a une dimension comprise entre le cinquième de la corde des aubes du carter et la longueur de corde desdites aubes
   - un deuxième côté du masque a une dimension comprise entre le cinquième de la corde desdites aubes et la hauteur de la pale de ladite aube.

Ces dimensions sont déterminées empiriquement en fonction de la zone considérée du carter et à partir du schéma de fragmentation des aubes qui détermine la forme et les dimensions des zones d'impact des fragments. Le schéma de fragmentation des aubes est propre à chaque technologie d'aube (aubes à talon, aubes à nageoires, aubes large corde,...).
- chaque masque est associé à un abaque spécifique utilisé pour déterminer un taux de nocivité à partir des informations de profondeur et de longueur de chaque impact à considérer.
- l'étape consistant à délimiter une surface d'inspection contenant le premier impact est réalisée au moyen de palpeurs et d'un calculateur associé.
- chaque abaque met en relation une valeur mesurée de la profondeur de l'impact à considérer et une plage de valeurs comprenant une valeur mesurée de la longueur de l'impact à considérer avec un taux de nocivité.
- la plage de valeurs comprenant la valeur mesurée de la longueur de l'impact à considérer a une amplitude de 5 millimètres au moins pour des impacts présentant une longueur inférieure à 30 millimètres.
- le procédé comporte l'étape supplémentaire consistant à, avant l'étape de mesure, exclure de l'ensemble d'impacts à considérer les impacts ayant une profondeur inférieure à 0,1 millimètre.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention. Les figures montrent :
- à la figure 1, une représentation schématique d'un exemple de carter de soufflante sur lequel peut être mis en oeuvre le procédé selon l'invention ;
- à la figure 2, un diagramme illustrant un exemple de mise en oeuvre du procédé selon l'invention ;
- à la figure 3, un premier exemple d'abaque susceptible d'être utilisé dans un exemple de mise en oeuvre du procédé selon l'invention ;
- à la figure 4, un deuxième exemple d'abaque susceptible d'être utilisé dans un exemple de mise en oeuvre du procédé selon l'invention.

### DESCRIPTION DETAILLEE D'AU MOINS UN MODE DE REALISATION DE L'INVENTION

Sauf précision contraire, un même élément apparaissant sur des figures différentes présente une référence unique.

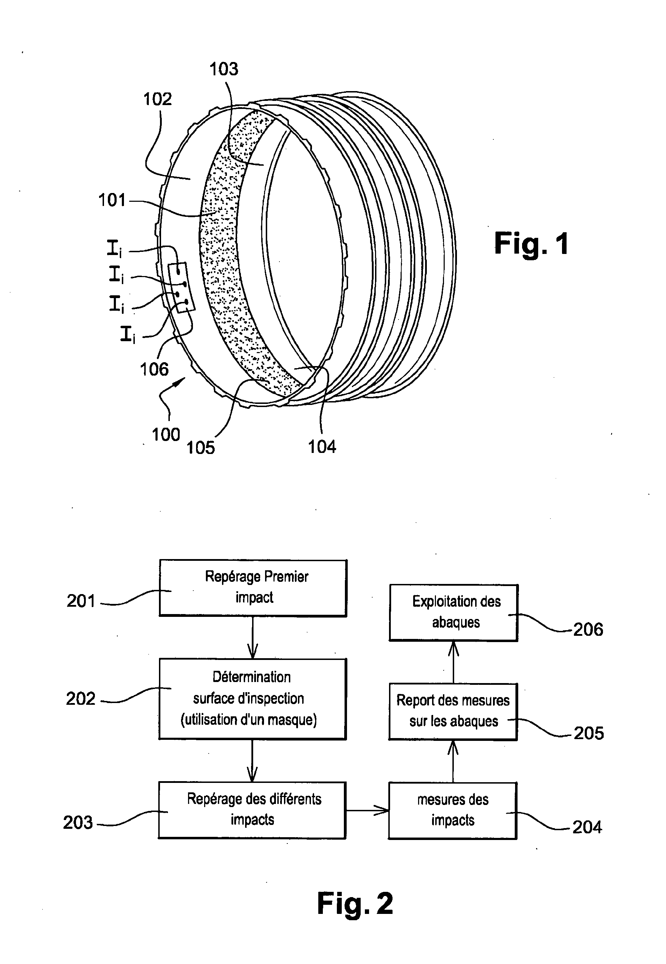

Sur la figure 1, on a représenté un carter de soufflante 100., qui est typiquement en aluminium Un pluralité d'aubes, non représentées, sont habituellement disposées en formant un disque à l'intérieur du carter 100.

Le carter 100 comporte une face interne 104, dont une partie centrale 101 présente une zone abradable 105. Dans la pratique, la zone abradable 105 est disposée en regard des aubes; sa fonction est de limiter la détérioration du carter lorsque les aubes frottent légèrement sur la face interne 104.

De part et d'autre de la zone abradable on trouve respectivement une zone amont 102, qui est la première zone rencontrée par l'air entrant dans le carter 100, et une zone aval 103, qui est la zone traversée par l'air une fois que celui-ci a été accéléré par les aubes en mouvement.

La figure 2 est un diagramme illustrant un exemple de mise en oeuvre du procédé selon l'invention.

Sur cette figure, on a représenté les étapes successives à observer pour l'exemple de mise en oeuvre considéré du procédé selon l'invention. On distingue ainsi, successivement :
- une première étape 201, dite étape de repérage d'un premier impact I1 (visible sur la figure 1), sur la face interne 104 du carter. Ce repérage est avantageusement réalisé de manière visuelle par un contrôleur. Dans un mode perfectionné du procédé selon l'invention, on peut utiliser des capteurs de type palpeur pour repérer le premier impact ; mais la solution visuelle, du fait de sa simplicité de mise en oeuvre, est avantageuse. Avantageusement, le premier impact n'est retenu que si il présente une profondeur supérieure à 0,1 millimètre ;
- une deuxième étape 202, dite étape de détermination d'une surface d'inspection 106 (visible sur la figure 1), dans laquelle on détermine une surface fermée de la face interne 104, surface fermée dans laquelle se trouve le premier impact, et sur laquelle le contrôleur va mesurer un taux de nocivité total. Le taux de nocivité est la grandeur qui va permettre de déterminer si l'ensemble des impacts détectés dans la zone sensible est considéré comme ayant trop détérioré le carter considéré pour que celui-ci puisse continuer à être utilisé, c'est-à-dire que sa capacité de rétention, au niveau de la surface d'inspection, n'a pas réduit la capacité de rétention du carter 100 de manière rédhibitoire.

La surface fermée choisie est déterminée essentiellement en fonction des fragments d'aube susceptible d'impacter la face interne 104 du carter 100 lorsque ceux-ci se brisent.

Un outil est utilisé pour délimiter la surface d'inspection. Avantageusement, dans l'invention, on propose l'utilisation d'un masque pour délimiter la surface d'inspection ; un masque étant simplement un élément matériel, par exemple en carton, ou en matière plastique, dans lequel on a ménagé une ouverture qui constitue la forme et les dimensions du masque, et en conséquence la frome et les dimensions de la surface d'inspection. Dans des exemples de mise en oeuvre plus élaborés, mais moins simples de mise en oeuvre, la surface d'inspection est délimitée en utilisant un calculateur qui gère le déplacement de palpeurs dans la surface d'inspection mémorisée par le calculateur.

Sous perte d'aube, c'est-à-dire lorsqu'une aube se détache, le carter est sollicité différemment selon les zones étudiées. En effet, lors d'une perte d'aube, la pale se fragmente en plusieurs morceaux de tailles et de masses différentes qui vont ensuite impacter le carter avec des vitesses variables suivant la zone (zone aval, zone amont, zone abradable). Ainsi, la surface d'inspection présente avantageusement une forme et/ou des dimensions qui sont variables en fonction de la zone considérée.

Dans des modes de mise en oeuvre avantageux de l'invention sur un moteur CFM56-7B, on choisit pour la zone amont un masque d'ouverture rectangulaire de dimension 20 millimètres de largeur et 71 millimètres de longueur, et pour la zone aval un masque de forme carrée de côté 250 millimètres.

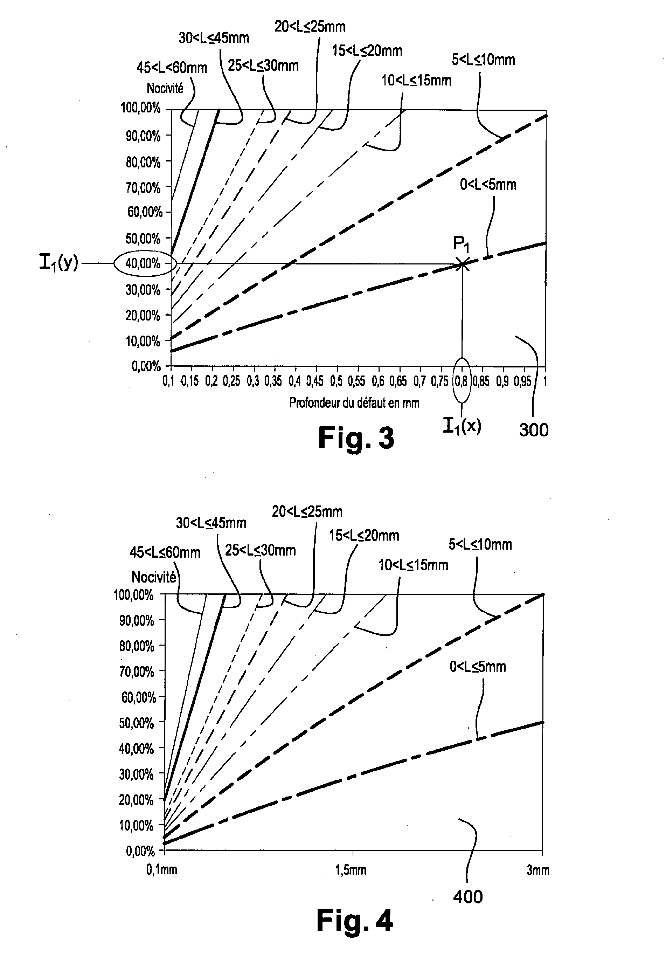

Le contrôleur recherche, grâce au masque, une surface critique. Cette surface critique correspond à celle comportant un maximum d'impacts nocifs pouvant rentrer dans la fenêtre. Par impact nocif, on désigne typiquement les impacts dont la profondeur est supérieure à 0,1 millimètre. L'inspecteur sera ainsi amené à répéter les opérations d'inspection pour toutes les combinaisons d'impacts possibles.
- une troisième étape 203 au cours de laquelle le contrôleur repère différents impacts Ii (visibles sur la figure 1) présents dans la surface d'inspection 106.
- une quatrième étape 204 au cours de laquelle le contrôleur mesure la profondeur et la longueur de chaque impact, avantageusement de chaque impact nocif, de la surface d'inspection délimitée par le masque.
- une cinquième étape 205 dans laquelle le contrôleur reporte les informations de mesure sur un abaque approprié. Avantageusement, on définit, dans l'invention, un abaque par zone du carter (zone amont, zone aval, zone abradable) est proposé. La figure 3 montre un exemple avantageux d'abaque 300 utilisé pour les contrôles dans la zone amont du carter de soufflante 100, avec des valeurs fonctionnelles, et la figure 4 montre un exemple avantageux d'abaque 400 utilisé pour les contrôles dans la zone aval du carter de soufflante 100, avec des valeurs fonctionnelles. Ainsi, avantageusement, dans le procédé d'inspection selon l'invention, on associe de manière bijective un masque et un abaque pour réaliser les contrôles.

Les abaques proposés selon l'invention sont organisés de la manière suivante :
- en abscisse, on trouve les valeurs mesurées des profondeurs des impacts ;
- en ordonnée, on trouve un pourcentage de nocivité de chaque impact considéré dans la surface d'inspection ;
- différentes courbes, des portions de droite dans les exemples représentés, assurent la mise en relation entre une profondeur d'impact et un pourcentage de nocivité associé à cet impact. Les courbes sont élaborées pour chaque longueur d'impact observé. Avantageusement, afin de limiter le nombre de courbes, chaque courbe de l'abaque est représentative d'une plage de valeurs de longueur d'impact mesuré.

Ces abaques sont conçus à partir d'une population représentative, typiquement quatre vingt dix pour cent des défauts constatés, retenue dans une distribution statistique des défauts en fonction de leurs longueurs. On cherche à couvrir un maximum de couples (profondeur ; longueur) de cette population représentative à l'aide d'un nombre minimal de courbes. Ces courbes sont ensuite optimisées par prise en compte de retour d'expérience des inspecteurs et de phénomènes tels que l'érosion.
- une sixième étape 206 dans laquelle le contrôleur exploite les abaques pour déterminer une valeur de nocivité totale pour la surface d'inspection à considérer.

L'utilisation des abaques par un contrôleur est la suivante : une fois qu'il a déterminé la surface d'inspection, il se réfère, pour le premier impact I1 de la surface d'inspection, à l'axe des abscisses au niveau duquel il reporte la valeur I1(X) de profondeur mesurée, 0,8 millimètre dans l'exemple illustré à la figure 3. Il recherche ensuite parmi les courbes de l'abaque, quelle est la courbe correspondant à la longueur mesurée pour l'impact considéré. Dans l'exemple représenté, on considère que la longueur du premier impact I1 est de 3 millimètres. Il projette alors l'abscisse I1(X) sur la courbe considérée pour obtenir un point P1 de l'abaque. En lisant, sur l'axe des ordonnées, la valeur de l'ordonnée I1(Y) du point P1, on obtient ainsi la valeur du taux de nocivité pour le premier point considéré. Dans l'exemple représenté, cette valeur est de 40 pour cent. L'opération est répétée pour l'ensemble des points d'impact repérés dans la zone d'inspection au cours de l'étape 203. En sommant les différentes valeurs de taux de nocivité obtenues pour chacun des points d'impact à considérer, on obtient la valeur de nocivité totale pour la surface d'inspection considérée. Si cette valeur est supérieure à cent pour cent, on considère que le carter 100 ne peut pas être utilisé en l'état.

On remarquera que les abaques des figures 3 et 4 ont été abattus pour ne prendre en compte que les impacts ayant une profondeur supérieure à 0,1 mm. En ne considérant que ces impacts, une diminution significative du temps d'inspection est obtenue.

La méthode d'inspection selon l'invention fait apparaître les avantages majeurs suivants :
- Nombre important de défauts couverts :
   Le nombre de défauts couverts par cette inspection est considérablement augmenté par rapport à l'utilisation des critères actuels.
- Diminution du temps d'inspection :
   Au lieu de relever trois paramètres par impacts (longueur, profondeur et distance inter-défaut) le contrôleur n'en relève plus que deux ; le troisième paramètre étant remplacé par l'utilisation du masque ou d'un moyen équivalent. De plus, la prise en compte des seules profondeurs d'impact supérieures à 0.1 mm diminue le nombre d'impacts contrôlés au moins par deux par rapport aux méthodes utilisées dans l'état de la technique.
- Souplesse du moyen et facilité de mise en oeuvre:
   La simplicité et le faible encombrement des outils masque-abaque rend possible son déploiement dans tous les ateliers de maintenance et permet également les inspections sous l'aile, ce qui est un avantage non négligeable.

Dans un mode de mise en oeuvre particulier de l'invention, on prévoit l'utilisation de moyens de contrôle automatique utilisant un moyen de mesure (type palpeur) couplé à un logiciel de calcul de la nocivité des défauts (programmé à l'aide des abaques). Si ce mode de mise en oeuvre est plus coûteux et plus encombrant à mettre en oeuvre que le mode de mise en oeuvre utilisant les masques, il demeure une possibilité de mise en oeuvre du procédé selon l'invention.

## Revendications

1. Procédé d'inspection d'impacts (Ii) présents sur une face interne (104) de carter (100) de soufflante, ledit procédé étant **caractérisé en ce qu'**il comporte les différentes étapes consistant à :
- repérer (201) un premier impact (I1) présent sur la face interne (104) du carter (100) de soufflante ;
- délimiter (202) une surface d'inspection (106) comportant ledit premier impact (I1);
- repérer (203) les différents impacts (Ii) présents dans la surface d'inspection (106) délimitée, lesdits différents impacts repérés formant un ensemble d'impacts à considérer ;
- mesurer (204), pour chaque impact (Ii) à considérer, la profondeur et la longueur dudit impact (Ii);
- pour chaque impact (Ii) à considérer, déterminer (205) une valeur de taux de nocivité, au moyen d'au moins un abaque (300 ; 400) mettant en relation la profondeur et la longueur de chaque impact à considérer avec un taux de nocivité ;
- déterminer (206), pour la surface d'inspection (106) comportant le premier impact (I1), une valeur de taux de nocivité total en additionnant le taux de nocivité déterminé pour chaque impact (Ii) à considérer.

2. Procédé selon la revendication précédente **caractérisé en ce que** l'étape consistant à délimiter (202) la surface d'inspection (106) contenant le premier impact est réalisée au moyen d'un masque.

3. Procédé selon la revendication précédente **caractérisé en ce que** le masque est de forme rectangulaire et présente les caractéristiques suivantes :
- un premier côté du masque a une dimension comprise entre le cinquième de la corde des aubes du carter et la longueur de corde desdites aubes ;
- un deuxième côté du masque a une dimension comprise entre le cinquième de la corde desdites aubes et la hauteur de la pale desdites aubes.

4. Procédé selon l'une quelconque des revendications 2 à 3 **caractérisé en ce que** les dimensions du masque dépendent de la localisation de la surface d'inspection, un premier masque de premières dimensions étant utilisé pour une zone amont (102) du carter, et/ou un deuxième masque de deuxièmes dimensions étant utilisé pour une zone abradable (105) du carter, et/ou un troisième masque de troisièmes dimensions étant utilisé pour une zone aval (103) du carter.

5. Procédé selon la revendication précédente **caractérisé en ce que** le premier masque est de forme rectangulaire, de longueur 71 millimètres plus ou moins dix pour, notamment 71 millimètres, cent et de largeur 20 millimètres plus ou moins dix pour cent, notamment 20 millimètres, et/ou le troisième masque est de forme carrée, de côté 250 millimètres plus ou moins dix pour cent, notamment 250 millimètres.

6. Procédé selon la revendication précédente **caractérisé en ce que** chaque masque est associé à un abaque spécifique utilisé pour déterminer un taux de nocivité à partir des informations de profondeur et de longueur de chaque impact à considérer.

7. Procédé selon la revendication 1 **caractérisé en ce que** l'étape consistant à délimiter (202) la surface d'inspection (106) contenant le premier impact (I1) est réalisée au moyen de palpeurs et d'un calculateur associé.

8. Procédé selon l'une quelconque des revendications précédentes **caractérisé en ce que** chaque abaque (300 ;400) met en relation une valeur mesurée de la profondeur de l'impact à considérer et une plage de valeurs comprenant une valeur mesurée de la longueur de l'impact à considérer avec un taux de nocivité.

9. Procédé selon la revendication précédente **caractérisé en ce que** la plage de valeurs comprenant la valeur mesurée de la longueur de l'impact à considérer a une amplitude de 5 millimètres au moins pour des impacts présentant une longueur inférieure à 30 millimètres.

10. Procédé selon l'une quelconque des revendications précédentes **caractérisé en ce qu'**il comporte l'étape supplémentaire consistant à, avant l'étape de mesure, exclure de l'ensemble d'impacts à considérer les impacts ayant une profondeur inférieure à 0,1 millimètre.

## Patentansprüche

1. Inspektionsverfahren von Zusammenstößen (Ii), die auf einer inneren Seite (104) des Gehäuses (100) eines Gebläses vorhanden sind, wobei das genannte Verfahren **dadurch gekennzeichnet ist, dass** es die verschiedenen Stufen umfasst, bestehend aus:
- dem Ausmachen (201) eines ersten Zusammenstoßes (I1), der auf der inneren Seite (104) des Gehäuses (100) eines Gebläses vorhanden ist;
- Begrenzung (202) einer Inspektionsfläche (106), die den genannten ersten Zusammenstoß (I1) umfasst;
- dem Ausmachen (203) der verschiedenen Zusammenstöße (Ii), die in der begrenzten Inspektionsfläche (106) vorhanden sind, wobei die verschiedenen ausgemachten Zusammenstöße eine Gruppe von zu berücksichtigenden Zusammenstößen bilden;
- der Messung (204) der Tiefe und der Länge des genannten Zusammenstoßes (Ii) für jeden zu berücksichtigenden Zusammenstoß (Ii);
- für jeden zu berücksichtigenden Zusammenstoß (Ii) die Bestimmung (205) eines Wertes des Schädlichkeitsgrades anhand wenigstens eines Abakus (300; 400), der die Tiefe und die Länge jedes zu berücksichtigenden Zusammenstoßes mit einem Schädlichkeitsgrad in Beziehung setzt;
- Die Bestimmung (206) eines Wertes des totalen Schädlichkeitsgrades für die Inspektionsfläche (106) mit dem ersten Zusammenstoß (I1) durch Addieren des für jeden zu berücksichtigenden Zusammenstoß (Ii) bestimmten Schädlichkeitsgrades.

2. Verfahren gemäß dem voranstehenden Anspruch, **dadurch gekennzeichnet, dass** die Stufe, die in der Begrenzung (202) der Inspektionsfläche (106) besteht, welche den ersten Zusammenstoß enthält, mittels einer Maske realisiert ist.

3. Verfahren gemäß dem voranstehenden Anspruch, **dadurch gekennzeichnet, dass** die Maske eine rechteckige Form hat und die folgenden Merkmale aufweist:
- eine erste Seite der Maske hat eine zwischen dem Fünftel des Seils der Schaufeln des Gehäuses und der Länge des Seils der genannten Schaufeln inbegriffene Abmessung;
- eine zweite Seite der Maske hat eine zwischen dem Fünftel des Seils der genannten Schaufeln und der Höhe des Rotors der genannten Schaufeln inbegriffene Abmessung.

4. Verfahren gemäß Anspruch 2 bis 3, **dadurch gekennzeichnet, dass** die Abmessungen der Maske von der Lokalisierung der Inspektionsfläche abhängen, wobei eine erste Maske mit ersten Abmessungen für einen vorgeschalteten Bereich (102) des Gehäuses verwendet wird und / oder eine zweite Maske mit zweiten Abmessungen für einen abriebfähigen Bereich (105) des Gehäuses verwendet wird und / oder eine dritte Maske mit dritten Abmessungen für einen nachgeschalteten Bereich (103) des Gehäuses verwendet wird.

5. Verfahren gemäß dem voranstehenden Anspruch, **dadurch gekennzeichnet, dass** die erste Maske eine rechteckige Form mit einer Länge von 71 Millimetern mit mehr oder weniger zehn Prozent, insbesondere 71 Millimetern, und einer Breite von 20 Millimetern mit mehr oder weniger zehn Prozent, insbesondere 20 Millimetern, aufweist und / oder die dritte Maske eine quadratische Form hat, auf der Seite 250 Millimeter mit mehr oder weniger zehn Prozent, insbesondere 250 Millimeter.

6. Verfahren gemäß dem voranstehenden Anspruch, **dadurch gekennzeichnet, dass** jede Maske einem spezifischen Abakus zugeordnet ist, der zur Bestimmung eines Schädlichkeitsgrades ausgehend von den Informationen der Tiefe und der Länge jedes zu berücksichtigenden Zusammenstoßes verwendet wird.

7. Verfahren gemäß Anspruch 1, **dadurch gekennzeichnet, dass** die Stufe, die in der Begrenzung (202) der Inspektionsfläche (106) besteht, die den ersten Zusammenstoß (Ii) enthält, mittels Fühler und einem zugeordneten Rechner realisiert ist.

8. Verfahren gemäß einem der voranstehenden Ansprüche, **dadurch gekennzeichnet, dass** jeder Abakus (300, 400) einen gemessenen Wert der Tiefe des zu berücksichtigenden Zusammenstoßes und einen Wertebereich mit einem gemessenen Wert der Länge des zu berücksichtigenden Zusammenstoßes mit einem Schädlichkeitsgrad in Beziehung setzt.

9. Verfahren gemäß dem voranstehenden Anspruch, **dadurch gekennzeichnet, dass** der Wertebereich mit dem gemessenen Wert der Länge des zu berücksichtigenden Zusammenstoßes eine Amplitude von wenigstens 5 Millimetern bei den Zusammenstößen hat, die eine Länge von weniger als 30 Millimetern aufweisen.

10. Verfahren gemäß einem der voranstehenden Ansprüche, **dadurch gekennzeichnet, dass** es die zusätzliche Stufe umfasst, die darin besteht, vor der gemessenen Stufe die Gruppe von zu berücksichtigenden Zusammenstößen auszuschließen, die eine Tiefe von weniger als 0,1 Millimetern hat.

## Claims

1. A method for inspecting impacts (Ii) present on an internal face (104) of a fan casing (100), said method being **characterised in that** it includes the different steps of:
- spotting (201) a first impact (I1) present in the internal face (104) of the fan casing (100);
- delimiting (202) an inspection area (106) including said first impact (I1);
- spotting (203) the different impacts (Ii) present on the delimited inspection area (106), said different spotted impacts forming a set of impacts to be considered;
- measuring (204), for each impact (Ii) to be considered, the depth and length of said impact (Ii);
- for each impact (Ii) to be considered, determining (205) a level of harmfulness value, by means of at least one chart (300; 400) relating the depth and length of each impact to be considered to a level of harmfulness;
- determining (206), for the inspection area (106) including the first impact (I1), a total level of harmfulness value by adding the level of harmfulness determined for each impact (Ii) to be considered.

2. The method according to the preceding claim, **characterised in that** the step of delimiting (202) the inspection area (106) containing the first impact is performed by means of a mask.

3. The method according to the preceding claim, **characterised in that** the mask is rectangular in shape and has the following characteristics:
- a first side of the mask has a dimension between the fifth part of the chord of the casing vanes and the length of the chord of said vanes;
- a second side of the mask has a dimension between the fifth part of the chord of said vanes and the height of the blade of said vanes.

4. The method according to any of claims 2 and 3, **characterised in that** the dimensions of the mask depend on the location of the inspection area, a first mask having first dimensions being used for an upstream zone (102) of the casing and/or a second mask having second dimensions being used for an abradable zone (105) of the casing and/or a third mask having third dimensions being used for a downstream zone (103) of the casing.

5. The method according to the preceding claim, **characterised in that** the first mask is rectangular in shape, having a length 71 millimetres within ten per cent, in particular 71 millimetres, and a width 20 millimetres within ten per cent, in particular 20 millimetres, and/or the third mask is square in shape, having a side 250 millimetres within ten per cent, in particular 250 millimetres.

6. The method according to the preceding claim, **characterised in that** each mask is associated with a specific chart used for determining a level of harmfulness from depth and length information of each impact to be considered.

7. The method according to claim 1, **characterised in that** the step of delimiting (202) the inspection area (106) containing the first impact (I1) is performed by means of tracers and an associated calculator.

8. The method according to any of the preceding claims, **characterised in that** each chart (300; 400) relates a measured value of the depth of the impact to be considered and a range of values comprising a measured value of the length of the impact to be considered to a level of harmfulness.

9. The method according to the preceding claim, **characterised in that** the range of values comprising the measured value of the length of the impact to be considered has an amplitude of at least 5 millimetres for impacts having a length lower than 30 millimetres.

10. The method according to any of the preceding claims, **characterised in that** it includes the further step of, prior to the measuring step, excluding from the set of impacts to be considered the impacts having a depth lower than 0.1 millimetres.
